# EUROPEAN PATENT SPECIFICATION

(11) **EP 2 778 805 B1**
(45) Date of publication and mention of the grant of the patent: **19.07.2017**
(21) Application number: 14154939.4
(22) Date of filing: 13.02.2014
(51) Int. Cl.: G05B 13/04, G05B 19/418

(54) **Advanced process control of a biodiesel plant**
Erweiterte Prozesssteuerung einer Biodieselanlage
Contrôle de processus avancé d'une installation de fabrication de biodiesel

(30) Priority: 13.03.2013 US 201313802191
(43) Date of publication of application: 17.09.2014
(73) Proprietor: Rockwell Automation Technologies, Inc., Mayfield Heights, OH 44124 (US)
(72) Inventor: Budaraju, Srinivas, Austin, TX Texas 78717 (US); Morrison, Timothy, Richmond, TX 77406 (US); Sugars, Michael, Elgin, TX Texas 78621 (US); Tay, Michael E., Georgetown, TX Texas 78626 (US); Kam, Kiew, Round Rock, TX Texas 78681 (US)
(74) Representative: Grünecker Patent- und Rechtsanwälte PartG mbB

(56) References cited:
- WO-A1-2008/141317
- WO-A2-2004/092908
- BE-A- 422 877
- PT-A- 104 718
- US-A1- 2009 234 629
- US-A1- 2010 082 140
- US-A1- 2010 082 312
- US-A1- 2011 052 480
- Jon Van Gerpen: "Biodiesel processing and production", Fuel Processing Technology, 25 June 2005 (2005-06-25), pages 1097-1107, XP055132665, Retrieved from the Internet: URL:http://www.sciencedirect.com/science/a rticle/pii/S0378382004001924 [retrieved on 2014-07-31]
- Anonymous: "Biodiesel", Wikipedia, the free encyclopedia, 12 March 2013 (2013-03-12), XP055262889, Retrieved from the Internet: URL:https://en.wikipedia.org/w/index.php?t itle=Biodiesel&oldid=543687245 [retrieved on 2016-04-05]

## Description

### BACKGROUND

The invention relates generally to control systems, and more particularly to process control employing novel techniques for controlling a biodiesel plant.

A biodiesel plant may include one or more continuous processes to produce biodiesel through chemical reactions, such as transesterification and esterification. The biodiesel plant may use a variety of feedstocks, such as vegetable or animal fats and oils. The feedstock is typically reacted with short-chain alcohols, such as methanol or ethanol, to produce the biodiesel. The biodiesel produced by the biodiesel plant may be used as a fuel in diesel engines. When used in diesel engines, the biodiesel may be used alone or blended with petrodiesel. A process control system may be used to control the biodiesel plant. For example, the process control system may include one or more single loop controllers. However, existing methods for controlling the biodiesel plant may suffer from various disadvantages that may result in decreased biodiesel production, inefficient use of raw materials, and low energy efficiency.

PT 104 718 A relates to a multivariable predictive control system and to the production of biodiesel.

WO 2008/141317 A1 relates to systems for nonlinear model predictive control of a biofuel fermentation process. In an example, the fundamental model may include mass and/or energy balance relationships, and may also include a kinetic model.

US 2010/082140 A1 relates to model predictive control for optimizing the blending of denaturants with undenatured biofuels.

US 2010/082312 A1 relates to model predictive control for optimizing drying processes, such as the drying of biofuel stillage products between parallel paths. Control of whole stillage flow rates through parallel distribution paths of centrifuges and dryers are optimized.

Van Gerpen, Jon: "Biodiesel processing and production", Fuel Processing Technology, URL: http://www.sciencedirect.com/science/article/pii/, 25 June 2005, pages 1097 to 1107 relates to biodiesel processing and production.

US 2011/052480 A1 relates to chlorine dioxide generation systems. An optical analyzer may be positioned along a reactant feed line to measure a reactant concentration. A controller may adjust a flow rate of the reactant in response to information provided by the optical analyzer.

WO 2004/092908 A2 relates to a reaction system which enables a plurality of optimization experiments for a reaction to be performed continuously, to enable optimal reaction parameters to be determined. Reactants are introduced into a reaction model selectively coupled to residence time chambers or directed to an analytical unit. The analytical unit determines the yield and/or quality for each optimization experiment, enabling optimal parameters to be determined.

BE 422 877 A relates to the transformation of vegetable oils and their use as a fuel.

Wikipedia Article on "Biodiesel" of March 12, 2013, states that biodiesel refers to a vegetable oil- or animal fat-based diesel fuel consisting of long-chain alkyl esters. Biodiesel is typically made by chemically reactive lipids with an alcohol producing fatty acid esters.

### BRIEF DESCRIPTION

It is the object of the present invention to improve the indication of quality of glycerin. This object is solved by the subject matter of the independent claims. Preferred embodiments are defined by the dependent claims.

The present invention provides novel techniques for controlling a biodiesel production plant. In particular, the present techniques are presented in the context of using a model predictive control algorithm of an advanced process controller to control one or more aspects of the biodiesel production system. However, it should be borne in mind that the invention may be applied in a wide range of contexts, in a variety of plants, and in any desired industrial, commercial, private, or other setting.

In accordance with one aspect of the present disclosure, a system includes a biodiesel production system and an advanced process controller configured to implement a model predictive control algorithm to control one or more aspects of the biodiesel production system.

In accordance with another aspect, biodiesel is prepared by a process including the steps of operating a biodiesel production system to produce the biodiesel and implementing a model predictive control algorithm using an advanced process controller to control one or more aspects of the biodiesel production system.

In accordance with a further aspect, a method includes operating a biodiesel production system to produce the biodiesel and implementing a model predictive control algorithm using an advanced process controller to control one or more aspects of the biodiesel production system.

### DRAWINGS

These and other features, aspects, and advantages of the present invention will become better understood when the following detailed description is read with reference to the accompanying drawings in which like characters represent like parts throughout the drawings, wherein:
FIG. 1 is a diagram of an exemplary biodiesel plant;
FIG. 2 is a diagram of a control system capable of implementing an exemplary method of controlling a biodiesel production plant;
FIG. 3 is a diagrammatical representation of a dynamic multivariable predictive module controller capable of implementing an exemplary method of controlling a biodiesel production plant;
FIG. 4 is a detailed diagram of an exemplary biodiesel production plant;
FIG. 5 is a diagram of an optimizer of a control system for operating a biodiesel production plant;
FIG. 6 is a diagram of a glycerin section of an exemplary biodiesel production plant;
FIG. 7 is a diagram of a biodiesel drying section of an exemplary biodiesel production plant; and
FIG. 8 is a graphical representation of a level of crude methyl ester in a crude methyl ester tank.

### DETAILED DESCRIPTION

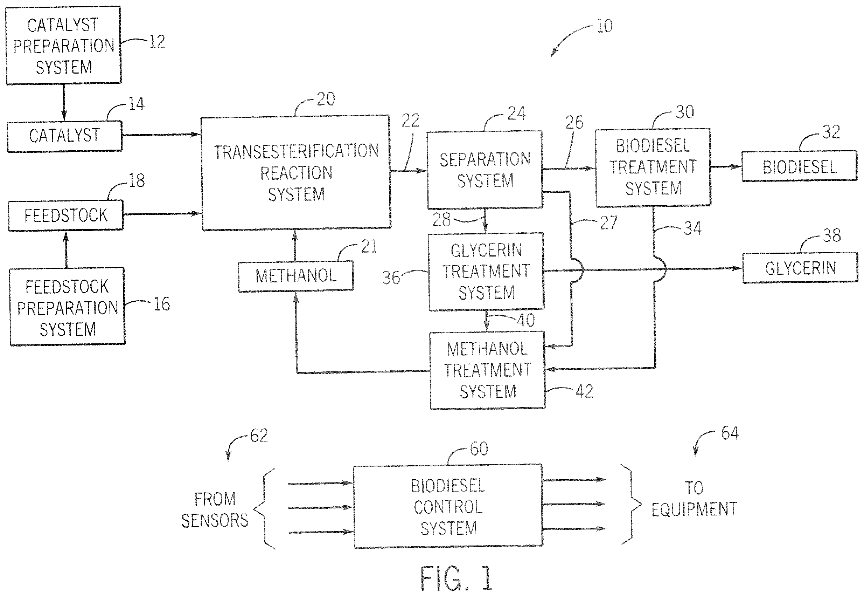

FIG. 1 is a diagram of an exemplary biodiesel production plant 10. For example, the biodiesel production plant 10 may include a catalyst preparation system 12 that produces a catalyst 14, which may include, but is not limited to, sodium hydroxide, potassium hydroxide, sodium methoxide, potassium methoxide, or any combination thereof. The catalyst 14 is used to speed up the transesterification reaction to produce biodiesel, but is not consumed by the transesterification reaction. The biodiesel production plant 10 may also include a feedstock preparation system 16 that produces a feedstock 18 that is used in the transesterification reaction to produce biodiesel. The feedstock preparation system 16 may receive various raw materials, such as, but not limited to, vegetable oil, animal fat, recycled vegetable oil, tallow, hog fat, or any combination thereof. These raw materials may be composed of triglycerides, which are esters that contain three fatty acids and glycerol (also called glycerine or glycerin). The feedstock preparation system 16 may be used to remove various impurities from the raw materials, such as, dirt, charred food, water, or any combination thereof. The feedstock preparation system 16 may also use degumming to remove phospholipids and other plant matter from the raw material. In addition, the raw material may be neutralized in the feedstock preparation system 16.

The biodiesel production plant 10 may also include a transesterification reaction system 20, in which the feedstock 18 is reacted with methanol 21 in the presence of the catalyst 14 to produce a crude mixture or reactor product 22. In other embodiments, other short-chain alcohols other than methanol 21 may be used in the transesterification reaction system 20. In the transesterification reaction system 20, the triglycerides of the feedstock 18 are reacted with the methanol 21 in the presence of the catalyst 14 to produce a mixture of methyl esters of fatty acids and glycerol (i.e., the reactor product 22). The methyl esters, or mono-alkyl esters, are separated from the glycerol to produce biodiesel. Specifically, the reactor product 22 is transferred to a separation system 24 to produce a crude biodiesel 26, a crude methanol 27, and a crude glycerin 28. The crude biodiesel 26 is treated in a biodiesel treatment system 30 to produce biodiesel 32 and a recycle methanol 34 (e.g., purified crude methanol). For example, the biodiesel treatment system 30 may use techniques, such as distillation, to separate the biodiesel 32 from the recycle methanol 34. The biodiesel 32 may then be transported to various storage and distribution facilities to be used to power diesel engines.

The crude glycerin 28 from the separation system 24 may be transferred to a glycerin treatment system 36 to produce glycerin 38 and a recycle methanol 40 (e.g., purified crude methanol). The glycerin treatment system 36 may utilize various techniques, such as acidification, neutralization, decanting, drying, or any combination thereof, to separate the glycerin 38 from the recycled methanol 40 and to purify the glycerin 38. The biodiesel production plant 10 may also include a methanol treatment system 42 for treating one or more of the crude methanol streams 27, 34, and 40 to produce the methanol 21 used in the transesterification reaction system 20. The methanol treatment system 42 may use various techniques, such as distillation, to produce the methanol 21.

A variety of sensors, or process instruments, may be placed throughout the biodiesel production plant 10. Such sensors may measure process data or operating variables, such as temperatures, flow rates, pressures, and/or levels, of the various processes in the plant 10. Alternatively, the operating variables may be determined using inferential models, laboratory values, or combinations thereof. Sensor output 62 may be transmitted to a biodiesel control system 60, which may be a model predictive controller. Plant operators may be able to monitor the sensor output 62 and interact with the control system 60 to provide new set points, for example. Based on sensor output 62, input from operators, programming, and/or other inputs, the control system 60 transmits output signals 64 to the process. The output signals 64 may be used to manipulate equipment, such as valves, motors, and/or pumps. By using the biodiesel control system 60, the quality of the biodiesel 32 produced by the biodiesel production plant 10 may be improved compared to biodiesel produced by plants that do not have the biodiesel control system 60. For example, the biodiesel 32 produced by the controlled biodiesel production plant 10 may be more uniform with a concentration of impurities (e.g., monoglycerides) with a variability of less than approximately ± 0.01 weight percent. Thus, the variability of the concentration of impurities of the biodiesel 32 produced using the biodiesel control system 60 may be less than that of biodiesel produced by plants that are not controlled by the biodiesel control system 60. For example, the concentration of impurities of the biodiesel 32 produced by the biodiesel control system 60 may vary between approximately 3.99 to approximately 4.01 weight percent, between approximately 4.49 to approximately 4.51 weight percent, or between approximately 4.99 to approximately 5.01 weight percent. These values of impurities are non-limiting examples and the biodiesel control system 60 may produce biodiesel 32 with different values of impurities, with a variability of less than approximately ± 0.01 weight percent, depending on customer requirements and/or governmental regulations.

In certain embodiments, the biodiesel control system 60 may include a mass balance module that provides an estimated composition of a flow stream of the biodiesel production plant 10 based on a mass balance calculation. For example, the flow stream may be the catalyst 14, feedstock 18, methanol 21, biodiesel 32, glycerin 38, or any combination thereof. In certain embodiments, the biodiesel production plant 10 may not include online analyzers or sample points to provide compositions of all flow streams of interest. Thus, the mass balance module may be used to provide an estimated composition of a particular flow stream or a flow rate of a component of the flow stream based on comparisons with measured flow rates of certain flow streams of the biodiesel production plant 10 and mass balance calculations. For example, the mass balance module may be used to determine the composition of the crude glycerin 28 based on mass balance calculations. Specifically, the mass balance module may provide an estimated flow rate of the crude glycerin 28 or the methanol in the crude glycerin 28. The biodiesel control system 60 can then use the estimated composition of the crude glycerin 28 as an indication of high methanol, for example. Specifically, the biodiesel control system 60 may compare the estimated flow rate of the crude glycerin 28 with a measured flow rate of the crude glycerin 28 as provided by a flow meter. If the estimated flow rate of the crude glycerin 28 is higher than the measured flow rate, then the crude glycerin 28 stream may contain more methanol than desired. Additionally or alternatively, the biodiesel control system 60 may compare the estimated flow rate of methanol in the crude glycerin 28 with an expected flow rate of methanol in the crude glycerin 28 based on the measured flow rate of the crude glycerin 28 and mass balance calculations. If the estimated flow rate of the methanol in the crude glycerin 28 is higher than the expected flow rate, then the crude glycerin 28 may contain more methanol than desired. High amounts of methanol in the crude glycerin 28 may result in higher energy consumption in the glycerin treatment system 36 to produce the recycle methanol 40 and/or may indicate the approach to a process constraint. Operators of the biodiesel production plant 10 may reduce the flow rate of the feedstock 18 to the transesterification reaction system 20 to reduce the amount of methanol in the crude glycerin 28. Alternatively, the operators may increase the flow rate of the feedstock 18 and thereby, increase production of the biodiesel 32, as long as the difference between the estimated and measured flow rates of crude glycerin 28 and/or the difference between the estimated and expected flow rates of methanol in the crude glycerin 28 does not exceed a threshold. Thus, the mass balance module provides data that the operators may use to operate the biodiesel production plant 10 as close to capacity as possible.

In other embodiments, the biodiesel control system 60 may include a stoichiometry module that provides a desired feed flow rate of a raw material of the biodiesel production plant 10 based on stoichiometric calculations. Stoichiometry refers to a branch of chemistry that deals with relative quantities of reactants and products in chemical reactions, such as the transesterification reaction of the transesterification reaction system 20. Thus, a desired quantity of one of the catalyst 14, feedstock 18, or methanol 21 may be calculated based on quantities of the other materials using stoichiometric calculations. For example, a desired amount of methanol 21 may be determined based on flow rates of the catalyst 14 and the feedstock 18. Adding more than this desired amount of methanol 21 to the transesterification reaction system 20 results in higher amounts of recycle methanol 34 and 40 from the biodiesel treatment system 30 and the glycerin treatment system 36, respectively. Thus, more energy is used by the biodiesel treatment system 30 and the glycerin treatment system 36 to process this excess recycle methanol 34 and 40. By using the stoichiometry module to provide the desired flow rate of methanol 21, the amounts of recycle methanol 34 and 40 and energy consumption by the biodiesel treatment system 30 and the glycerin treatment system 36 may be reduced, thereby improving the overall efficiency of the biodiesel production plant 10. In other embodiments, the stoichiometry module may be used to provide desired flow rates of the catalyst 14, feedstock 18, acid, caustic, or any combination thereof.

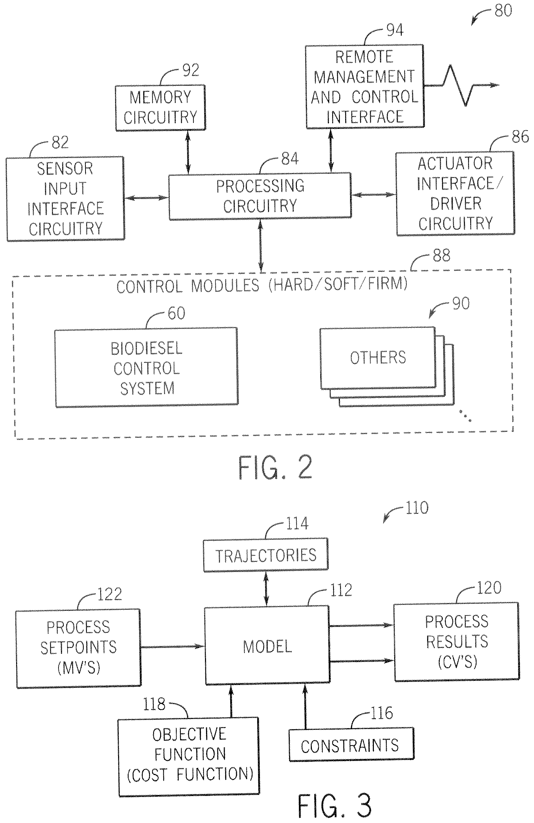

FIG. 2 shows a diagram of a control system 80 for the biodiesel production plant 10 capable of implementing an exemplary method of controlling the biodiesel production plant 10. For example, sensor input interface circuitry 82 may organize input from a variety of sensors and configure it into a recognizable form, such as a 4-20 mA signal, for processing circuitry 84. In addition, the processing circuitry 84 may send queries or adjust settings of the sensors through the interface circuitry 82. Similarly, actuator interface and/or driver circuitry 86 may organize output from the processing circuitry 84 to ensure transmission to the correct device and/or transform the output into a compatible format. The actuators and/or drivers may also provide status information back to the processing circuitry 84. Connected to the processing circuitry 84 may be one or more control modules 88, which may exist as hardware, software, or firmware. The control modules 88 serve to separate the tasks performed by the processing circuitry into smaller programs that may be easier to install, modify, debug, upgrade, and/or replace without disrupting the overall operation of the biodiesel production plant 10. For example, the biodiesel control system 60 may be one of the control modules 88. In addition, there may be one or more other control modules 90 depending on the complexity or architecture of the biodiesel production plant 10.

The processing circuitry 84 of FIG. 2 may also communicate with memory circuitry 92 that can store processed data or data to be processed by the processing circuitry 84. It should be understood that any type of computer accessible memory device capable of storing the desired amount of data and/or code may be utilized in the control system 80. For example, the memory circuitry 92 may include one or more memory devices, such as magnetic, solid state, or optical devices, of similar or different types, which may be local and/or remote to the control system 80. The memory circuitry 92 may store data, processing parameters, and/or computer programs having one or more routines for performing the processes described herein. Finally, information may be shared between a remote management and control interface 94 and the processing circuitry 84. The interface 94 enables operators, engineers, and/or management at a remote location to monitor and/or interact with the processing circuitry 84.

FIG. 3 illustrates a dynamic multivariable predictive model controller 110 (e.g., model predictive controller), which may govern the control actions implemented by the processing circuitry 84 of FIG. 2. For example, one of the control actions may be the control of the biodiesel production plant 10. The dynamic predictive model may define mathematical relationships that include not only steady state relationships, but also time varying relationships required for each parameter change to be realized in an output. In other words, a model 112 may not only define how changes in certain process variables affect other process variables, but also rates at which such changes occur. Based on such relationships, the model 112 may derive or predict one or more anticipated trajectories 114 representing desired future values or set points for particular process variables over a time period. The trajectories 114 may be determined based at least partially on certain operating constraints 116 imposed on the controller 110 as well as one or more objective functions 118 associated with the controller 110.

Turning to the constraints 116 and objective functions 118 in more detail, the constraints 116 may include controllable constraints (e.g., those that a process has the ability and discretion to change) as well as external constraints (e.g., those outside of the process itself). Examples of constraints include, but are not limited to, process constraints, energy constraints, equipment constraints, legal constraints, operator-imposed constraints, or combinations thereof. Essentially, the constraints 116 imposed on a particular controller 110 may be representative of limits by which a controller 110 may manipulate certain manipulated variables (MV's) in controlling a process. The objective function 118 may be a mathematical relationship that defines or sets the goal or goals for the overall optimization of the process (or sub-processes within a process). In general, the objective function 118 may provide one or more consistent numerical metrics by which a process or sub-process strives to achieve and over which the performance of the process or sub-process may be measured or evaluated. The objective function 118 may be defined in terms of either objectives to be obtained or maximized or costs to be minimized, or both. Thus, the model 112 may attempt to achieve one or more process results 120 or targets (i.e., controlled variables, or CV's) based on the control or manipulation of process set points 122 for one or more other process variables (MV's) in accordance with the aforesaid trajectories 114, constraints 116, and/or objective function 118 associated with the controller 110.

For example, an exemplary biodiesel control system 60 may perform several different steps to control the biodiesel production plant 10. In one embodiment, the control system 60 may be configured to consider the purity of the biodiesel 32 as one of the operating variables and configured such that steam pressure or temperature is one of the constraints 116. In addition, one of the objective functions 118 may be to minimize an economic cost of energy utilized in the biodiesel production plant 10. An additional objective function 118 may be to maximize an economic value of products of the biodiesel production plant 10, such as the biodiesel 32, or to achieve a target or maximum throughput of biodiesel 32. Combining the two objective functions 118, an overall optimization objective may be to reduce energy costs per unit mass of biodiesel 32 produced by the production plant 10. In addition, based on the operating variables, constraints 116, and objective functions 118, the control system 60 may determine optimal flow rates of the catalyst 14, feedstock 18, and methanol 21. Further, the control system 60 may control the flow rates based on the optimal flow rate determinations. In certain embodiments, the control system 60 may cyclically repeat the above steps and in further embodiments, the steps may be performed sequentially or simultaneously.

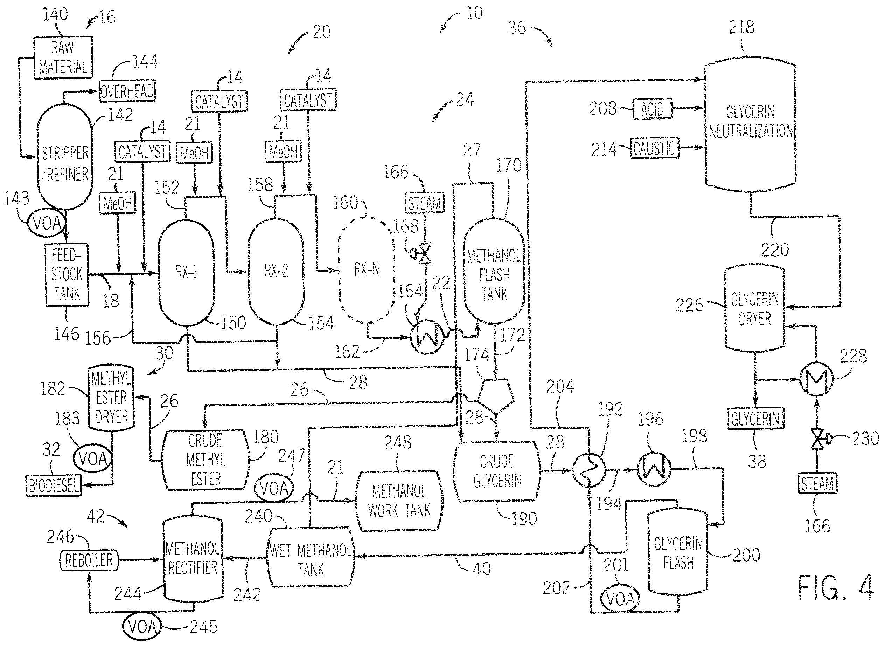

FIG. 4 is a detailed representation of the biodiesel production plant 10. As shown in FIG. 4, a raw material 140 is transferred to a stripper/refiner 142 of the feedstock preparation system 16. The stripper/refiner 142 may be a distillation column configured to separate undesirable materials and/or impurities, such as free fatty acids (FFAs), from the raw material 140 to produce an overhead stream 144. For example, the components of the overhead stream 144 may produce undesirable by-products in the transesterification reaction system 20, and therefore the stripper/refiner 142 removes the overhead stream 144 from the raw material 140 to produce the feedstock 18. which may be stored in a feedstock tank 146. The feedstock 18 is then combined with the methanol 21 and the catalyst 14 to a produce a mixture that is then introduced into a first reactor 150 of the transesterification reaction system 20. The mixture begins to undergo the transesterification reaction described above to produce crude reactor product 152, which may then be transferred to a second reactor 154. In certain embodiments, additional methanol 21 and/or catalyst 14 may be added to the crude reactor product 152 before being transferred to the second reactor 154. In certain embodiments, a recycle stream 156 may be recycled from the second reactor 154 to the inlet of the first reactor 150 to help adjust the extent of the transesterification reaction in the first reactor 150. After the mixture continues to undergo the transesterification reaction in the second reactor 154, crude reactor product 158 may be transferred to one or more of N reactors 160 to produce additional crude reactor product 162. In the illustrated embodiment, the transesterification reaction may be better adjusted to achieve the desired production of biodiesel by staging the reaction in two or more reactors. In certain embodiments, additional methanol 21 and/or catalyst 14 may be added to the crude reactor product 158 prior to addition to the N reactors 160.

As described above, the reactor processes of the transesterification reaction system 20 include continuous reactors in series. In other embodiments, the transesterification reaction system 20 may include batch reactor processes. Specifically, the feedstock 18, methanol 21, catalyst 14, and/or other co-feedstock are added to a batch reactor vessel and the reaction extent is managed by residence time and/or mixing energies (e.g., contact between the feedstocks and catalyst). The previously described control concepts may also be applied to these embodiments. For example, stoichiometric or material balance equations as used to support inferential quality models and control functions may be adjusted to match the batch equipment topology. In addition, residence time is relevant to the reaction extent in both the continuous and batch reactors. In the embodiments that include batch reactors, auxiliary equipment may be operated in a continuous fashion and thus, the separation system 24, biodiesel treatment system 30, glycerin treatment system 36, and/or methanol treatment system 42 may be controlled in a similar manner to that of embodiments that include continuous reactor processes.

As shown in FIG. 4, the crude reactor product 162 from the N reactors 160 may be heated in a reactor product heater 164. In other embodiments, the N reactors 160 may be omitted and the crude reactor product 158 transferred directly from the second reactor 154 to the reactor product heater 164. As illustrated, steam 166 may be supplied to the reactor product heater 164 via a steam control valve 168. The reactor product heater 164 may be used to increase a temperature of the reactor product 162. Reactor product 22 from the reactor product heater 164 may then be transferred to a methanol flash tank 170, where the increased temperature of the reactor product 22 may facilitate separation of the crude methanol 27. Essentially methanol-free crude biodiesel 172 from the methanol flash tank 170 may be transferred to a decanter 174, to separate the crude biodiesel 26 from the crude glycerin 28. Specifically, the decanter 174 may take advantage of the difference in densities between the crude biodiesel 26 and the crude glycerin 28 to separate one from the other. The crude biodiesel 26 may be transferred from the decanter 174 to a crude methyl ester tank 180 of the biodiesel treatment system 30. From the crude methyl ester tank 180, the crude biodiesel 26 may be transferred to a methyl ester dryer 182 to remove water and other impurities to produce the biodiesel 32.

Returning to the decanter 174, the crude glycerin 28 may be transferred to a crude glycerin tank 190. In addition, crude glycerin 28 may be recovered from the first and second reactors 150 and 154 and transferred to the crude glycerin tank 190. From the crude glycerin tank 190, the crude glycerin 28 may be transferred to a crude glycerin cross exchanger 192 to be heated. Heated crude glycerin 194 from the cross exchanger 192 may be transferred to a crude glycerin heater 196 for further heating to produce heated crude glycerin 198. Heating the crude glycerin 28 in the cross exchanger 192 and in the crude glycerin heater 196 may facilitate the preparation of the glycerin 38 in the glycerin treatment system 36. Next, the heated crude glycerin 198 may be transferred to a glycerin flash tank 200 to produce the recycle methanol 40 and a crude glycerin 202. The essentially methanol-free crude glycerin 202 may be used in the cross exchanger 192 to preheat the crude glycerin 28. Cooled crude glycerin 204 from the cross exchanger 192 may be transferred to a glycerin neutralization tank 218. As shown in FIG. 4, an acid 208 and/or a caustic 214 may be added to the cooled crude glycerin 204 in the glycerin neutralization tank 218 to produce neutralized glycerin 220. The neutralized glycerin 220 from the glycerin neutralization tank 218 may then be transferred to a glycerin dryer 226, which may utilize distillation to separate methanol from the glycerin. In certain embodiments, steam 166 may be used in a glycerin heater 228 to heat the neutralized glycerin 220 circulating through the glycerin dryer 226. A steam control valve 230 may be used to adjust the flow rate of the steam 166 to the glycerin heater 228. As water and other impurities are driven off in the glycerin dryer 226, the glycerin 38 may be produced.

In the methanol treatment system 42, a wet methanol tank 240 may receive the crude methanol 27 from the methanol flash tank 170 and the recycle methanol 40 from the glycerin flash tank 200. Wet methanol 242 from the wet methanol tank 240 may be transferred to a methanol rectifier 244, which may be a distillation column. The methanol rectifier 244 may include a reboiler 246 to provide heat to drive the distillation of the wet methanol 242. The methanol 21 from the methanol rectifier 244 may then be transferred to a methanol work tank 248 before being used in the transesterification reaction system 20, as described above. In other embodiments, the biodiesel production plant 10 may be configured differently from that shown in FIG. 4. For example, the biodiesel production plant 10 may use different processes and/or equipment in the production of the biodiesel 32.

As shown in FIG. 4, several virtual online analyzers (VOAs) may be distributed throughout the biodiesel production plant 10. The VOAs provide estimates of various parameters, such as compositions, of the biodiesel production plant 10. In other words, VOAs may be configured to provide an estimated value for certain variables of the biodiesel production plant 10 based on mathematical models of the variables. Specifically, the VOAs may use mathematical models based on mass balances or neural network models that correlate well with actual process measurements. VOAs may be useful when the biodiesel production plant 10 does not include online analyzers or have laboratory facilities for analysis of samples. For example, without the use of VOAs, the biodiesel control system 60 may not have information regarding some controlled variables to provide feedback to the control system 60. Once a VOA is created and validated, the VOA may provide accurate estimates of composition information without the capital, operating, and maintenance costs associated with online analyzers. In addition, VOAs may provide property estimates at a higher frequency than possible with laboratory analyses. During the execution of VOAs, available results of laboratory analyses may be used to correct (bias) the VOAs to reduce the effect of unmodeled bias and/or unmeasured disturbances. In addition, time shifts between process conditions and laboratory analyses may be accounted for using appropriate process dynamics to allow for accurate biasing of the VOAs, which may provide high model fidelity.

One of the VOAs of the biodiesel production plant 10 may be an overhead weight percent VOA 143, which provides an estimate of the amount of the components of the overhead stream 144 in the feedstock 18. The overhead weight percent VOA 143 may be based on various inputs, such as temperatures, pressures, and flow ratios associated with the stripper/retiner 142. The biodiesel control system 60 may use the overhead weight percent VOA 143 in controlling the operation of the stripper/refiner 142. For example, if the amount of the components of the overhead stream 144 in the feedstock 18 is above a threshold, the biodiesel control system 60 may increase the amount of steam to the stripper/refiner 142, decrease a reflux of the stripper/refiner 142, decrease an operating pressure of the stripper/refiner 142, or any combination thereof. In certain embodiments, the biodiesel control system 60 may operate the stripper/refiner 142 such that the overhead weight percent VOA 143 is close to the threshold to reduce steam requirements and/or reduce the possibility of flooding the stripper/refiner 142.

The biodiesel production plant 10 may also include a biodiesel VOA 183. Specifically, the biodiesel VOA 183 may be configured to provide an estimate of the amount (i.e., purity) of biodiesel in the biodiesel 32 and/or an estimate of the amount of impurities (e.g., monoglycerides) in the biodiesel 32. The biodiesel control system 60 may use the biodiesel VOA 183 in controlling the operation of the methyl ester dryer 182. For example, if the amount of biodiesel in the biodiesel 32 is below a threshold and/or the amount of monoglycerides in the biodiesel 32 is above a threshold, the biodiesel control system 60 may adjust the operation of the methyl ester dryer 182 such that more water is removed from the biodiesel 32.

Another VOA may be a methanol in glycerin VOA 201, which may be configured to provide an estimate of the amount of methanol in the crude glycerin 202. The biodiesel control system 60 may use the methanol in glycerin VOA 201 in controlling the operation of the glycerin flash tank 200. For example, if the amount of methanol in the crude glycerin 202 is above a threshold, the biodiesel control system 60 may increase the amount of steam to the crude glycerin heater 196, decrease the operating pressure of the glycerin flash tank 200, or any combination thereof.

In certain embodiments, the biodiesel production plant 10 may also include a methanol rectifier bottom composition VOA 245 and/or a methanol rectifier top composition VOA 247, which may provide estimates of the compositions of the bottoms stream from the methanol rectifier 244 and the methanol 21 from the top of the methanol rectifier 244, respectively. The biodiesel control system 60 may use the methanol rectifier bottom composition VOA 245 and/or the methanol rectifier top composition VOA 247 in controlling the operation of the methanol rectifier 244. For example, if the amount of impurities in the methanol 21 is above a threshold, the biodiesel control system 60 may decrease the amount of steam to the reboiler 246, increase the reflux of the methanol rectifier 244, increase the operating pressure of the methanol rectifier 244, or any combination thereof.

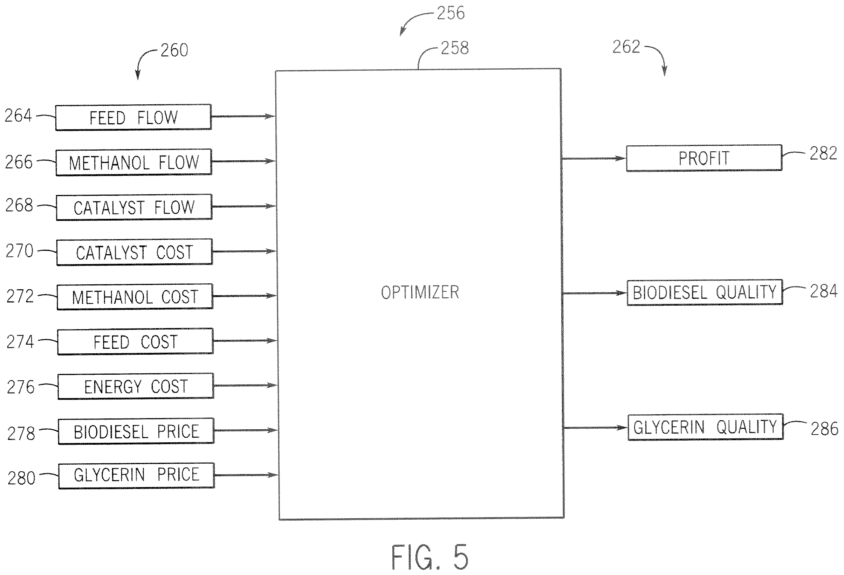

FIG. 5 is diagram of an optimization system 256 that may be used to control the biodiesel production plant 10. Specifically, the optimization system 256 may include an optimizer 258 that receives one or more inputs 260 and generates one or more outputs 262. For example, one of the inputs 260 may be a feed flow 264, which may represent a flow rate of the feedstock 18. Similarly, other inputs 260 may include a methanol flow 266 that represents a flow rate of the methanol 21 and a catalyst flow 268 that represents a flow rate of the catalyst 14. Another input 260 to the optimizer 258 may be a catalyst cost 270 that represents a unit cost of the catalyst 14. Similarly, other inputs 260 may include a methanol cost 272 that represents a unit cost of the methanol 21 and a feed cost 274 that represents a unit cost of the feedstock 18. An energy cost 276 may represent a cost of energy used to run one or more portions of the biodiesel production plant 10. For example, the energy cost 276 may represent a unit cost of electricity, steam, water, or any combination thereof. Another input 260 to the optimizer 258 may be a biodiesel price 278 that represents a unit price of the biodiesel 32. Similarly, a glycerin price 280 may represent a unit price of the glycerin 38.

One or more of the inputs 260 may be used by the optimizer 258 to generate the one or more outputs 262. For example, a profit 282 may be one of the outputs 262. In addition, a biodiesel quality 284 and a glycerin quality 286 may be additional examples of outputs 262. For example, the biodiesel quality 284 may be a purity or impurity specification of the biodiesel 32. Similarly, the glycerin quality 286 may represent a purity or impurity specification for the glycerin 38. In certain embodiments, the optimizer 258 may be used to optimize one or more of the outputs 262. For example, the optimizer 258 may be used to maximize the profit 282. In other embodiments, the optimizer 258 may be used to produce biodiesel 32 that is within a threshold of a purity or impurity specification of the biodiesel 32, as represented by the biodiesel quality 284. Thus, the optimizer 258 may be used to balance yield verses chemical usage or chemical cost. For example, as one or more of the catalyst, methanol, and/or feed costs 270, 272, and 274 increases, the optimizer 258 may adjust one or more of the feed, methanol, or catalyst flows 264, 266, and 268 to maximize the profit 282. In another example, increasing the catalyst flow 268 may result in increased soap production, which may be undesirable and negatively affect the profit 282. Soap may be generated in the transesterification reaction system 20 from the saponification of FFAs in the feedstock 18. If the feedstock 18 has a high amount of FFAs, excessive soap production and/or catalyst 14 consumption may result. Thus the optimizer 258 may adjust the catalyst flow 268 to achieve a maximum profit 282.

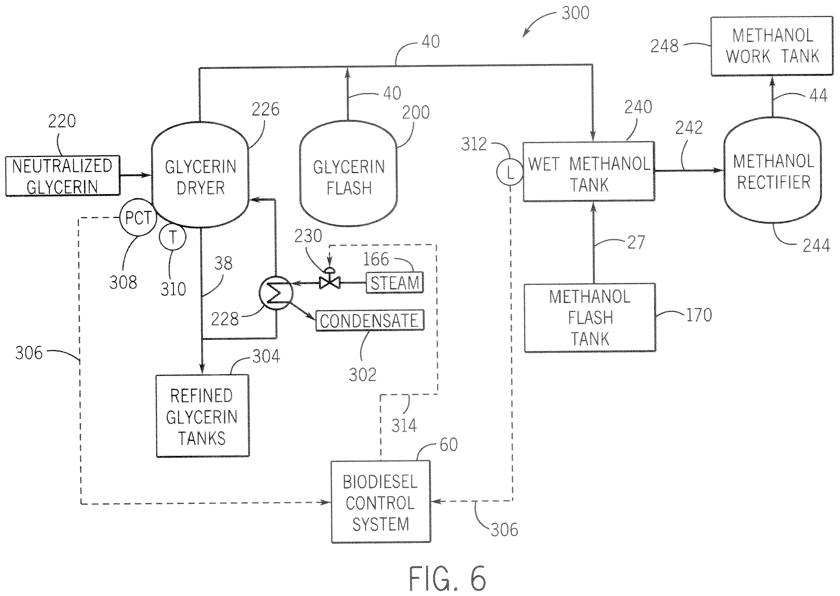

FIG. 6 is a diagram of portion 300 of the glycerin treatment system 36 and the methanol treatment system 42. As shown in FIG. 6, the glycerin heater 228 is used to provide heat to the glycerin dryer 226. Specifically, steam 166 is provided to the glycerin heater 228, which produces condensate 302. The glycerin 38 may be stored in one or more refined glycerin tanks 304. As shown in FIG. 6, one or more signals 306 may be provided to the biodiesel control system 60. Specifically, a pressure compensated temperature (PCT) 308 of the glycerin dryer 226 may be provided to the biodiesel control system 60. The PCT 308 provides a temperature of the glycerin dryer 226 that is compensated by a pressure of the glycerin dryer 226 provided by a pressure sensor. The PCT 308 of the glycerin dryer 226 may provide an improved indication of the quality of the glycerin than that provided by an actual temperature sensor 310. In other words, the PCT 308 may be different from the actual temperature provided by the temperature sensor 310 under certain conditions. For example, the pressure of the glycerin dryer 226 may vary with changes in the flow rate of the neutralized glycerin 220. As the pressure of the glycerin dryer 226 changes, the desired temperature of the glycerin dryer 226 to maintain the quality of the glycerin 38 may also change. If the temperature 310 was used to control the amount of steam 166 instead of the PCT 308, the amount of steam 166 may be higher than needed to maintain the quality of the glycerin 387. Thus, by using the PCT 308 to control the operation of the glycerin dryer 226, the amount of steam 166 may be reduced. In certain embodiments, the wet methanol tank 240 may include a level sensor 312.

In response to the received signals 306, the biodiesel control system 60 may produce one or more output signals 314. For example, the output signal 314 may be used to control the steam control valve 230 to the glycerin heater 228. Specifically, the PCT 308 may be used by the biodiesel control system 60 to control the steam control valve 230 instead of using the temperature sensor 310, as discussed above. One of the quality parameters for the glycerin 38 may be a water composition. The temperature sensor 310 may not provide an accurate indication of the water composition in the glycerin 38. Instead, the PCT 308 may provide an improved indication of the water composition in the glycerin 38, especially as the pressure of the glycerin dryer 226 varies. Thus, by using the PCT 308 instead of the temperature 310 by the biodiesel control system 60, better control of the steam 166 to the glycerin heater 228 may be achieved. Specifically, less steam 166 may be used, thereby increasing the efficiency of the biodiesel production plant 10.

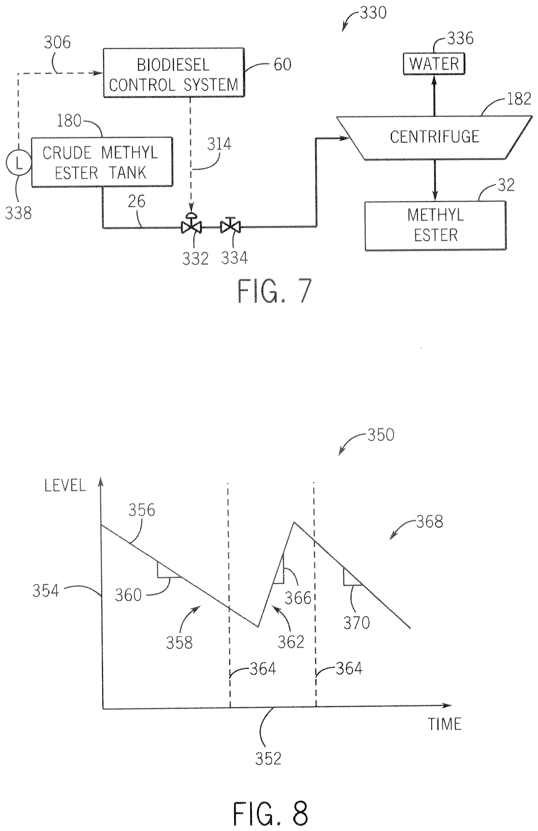

FIG. 7 is a diagram of a portion 330 of the biodiesel treatment system 30. As shown in FIG. 7, the crude biodiesel 26 may be transferred from the crude methyl ester tank 180 to the methyl ester dyer 182, which may be a centrifuge in certain embodiments. A crude biodiesel control valve 332 may be used to adjust a flow rate of the crude biodiesel 26 from the crude methyl ester tank 180 to the centrifuge 182. In addition, a crude biodiesel isolation valve 334 may be used to block the flow of the crude biodiesel 26 to the centrifuge 182. By centrifuging the crude biodiesel 26, the centrifuge 182 may produce water 336 and the methyl ester, or biodiesel 32. As shown in FIG. 7, a level sensor 338 may be coupled to the crude methyl ester tank 180 to provide the signal 306 representing the level of crude biodiesel 26 to the biodiesel control system 60. The biodiesel control system 60 may provide the output signal 314 to the control valve 332 based on the level in the crude methyl ester tank 180, as provided by the level sensor 338. In certain embodiments, the centrifuge 182 may be backwashed on a regular basis to improve operating efficiency and capacity. During the backwashing of the centrifuge 182, the isolation valve 334 may be manually closed by operators. During this time, the level in the crude methyl ester tank 180 may rise. Without the biodiesel control system 60, when the isolation valve 334 is reopened by the operators, the control valve 332 may operate in an undesired manner. Specifically, a large flow rate (e.g., slug) of the crude biodiesel 26 may be sent to the centrifuge 182 by the control valve 332. This may be caused by the flow controller for the control valve 332 winding up. In other words, during the backwashing of the centrifuge 182, there is no flow through the control valve 332 and the valve 332 may open completely in an attempt to provide the desired flow rate. When the isolation valve 334 is reopened, the completely open control valve 332 provides a flow rate of crude biodiesel 26 much higher than desired and takes time to adjust to provide the desired flow rate. Thus, in certain embodiments, the biodiesel control system 60 may manage the flow rate of the crude biodiesel 26 based on a rate of change in the level 338, as discussed in detail below.

FIG. 8 is graph 350 of the level of the crude methyl ester tank 180 provided by the level sensor 338. Specifically, an x-axis 352 represents time and a y-axis 354 represents the value provided by the level sensor 338. A curve 356 represents the level 338 during a first period 358 (e.g., normal operation of the centrifuge 182). As shown in FIG. 8, the curve 356 has a negative slope 360. In a second period 362, the centrifuge 182 undergoes backwashing. The second period 362 may be generally defined by dashed lines 364. As shown in FIG. 8, the curve 356 has a positive slope 366 in the second period 362. In other words, the level 338 rises in the crude methyl ester tank 180 during backwashing of the centrifuge 182 caused by closing the isolation valve 334. In a third period 368 (e.g., normal operation after backwashing), the curve 356 has a negative slope 370 caused by opening of the isolation valve 334. As shown in FIG. 8, the rapid changes in the level as represented by the curve 356 may result in undesired operation with traditional proportional integral derivative (PID). Specifically, the derivative term of a PID controller is calculated by determining the slope of the error between a measured value and a setpoint over time and multiplying this rate of change by the derivative gain. During the second period 362, the derivative term may be sensitive to the large change in slope of the curve 356. Thus, the biodiesel control system 60 may adjust the control valve 332 based the rate of change of the level 338 in the second period 362 instead of the value of the level 338 itself. By utilizing the rate of level change instead of the actual level, the control of the flow rate of the crude biodiesel 26 may be improved.

## Claims

1. A system, comprising:
a biodiesel production system (10); and
an advanced process controller (60) configured to implement a model predictive control algorithm to control one or more aspects of the biodiesel production system,
**characterized in that**
the biodiesel production system further comprises a glycerin dryer (226) configured to separate a neutralized glycerin (220) into crude methanol and glycerin via distillation, and the model predictive control algorithm implemented by the advanced process controller acts on a pressure-compensated temperature (308) of the glycerin dryer

2. The system of claim 1, wherein the biodiesel production system comprises:
a catalyst preparation system configured to prepare a catalyst;
a feedstock preparation system configured to prepare a feedstock;
a transesterification reaction system configured to receive the catalyst, feedstock, and methanol to produce a crude mixture;
a separation system configured to separate the crude mixture into a crude biodiesel and a crude glycerin;
a biodiesel treatment system configured to treat the crude biodiesel to produce biodiesel and the crude methanol;
a glycerin treatment system comprising the glycerin dryer, wherein the glycering treatment system is configured to treat the crude glycerin to produce the glycerin and the crude methanol; and
a methanol treatment system configured to treat the crude methanol to produce the methanol.

3. The system of claim 1 or 2, wherein model predictive control algorithm implemented by the advanced process controller comprises a virtual online analyzer configured to provide an estimated value for a variable of the biodiesel production system, wherein the virtual online analyzer is based on a mathematical model of the variable.

4. The system of any one of claims 1 to 3, wherein the virtual online analyzer is configured to provide the estimated value of at least one of an overhead weight percent, a methanol rectifier top composition, a methanol rectifier bottom composition, a biodiesel product composition, a biodiesel water composition, a methanol in glycerin concentration, or any combination thereof.

5. The system of any one of claims 1 to 4, wherein the model predictive control algorithm implemented by the advanced process controller comprises a mass balance module configured to provide an estimated composition of a flow stream of the biodiesel production system based on a mass balance calculation, and
wherein the flow stream of the biodiesel production system is at least one of a catalyst, a feedstock, a methanol, a biodiesel, a glycerin, or any combination thereof.

6. The system of any one of claims 1 to 5, wherein the model predictive control algorithm implemented by the advanced process controller comprises a stoichiometry module configured to provide a desired feed flow rate of a raw material of the biodiesel production system based on a stoichiometric calculation, wherein the raw material comprises at least one of feedstock, methanol, acid, caustic, or any combination thereof, the stoichiometric calculation being based on flow rates of the catalyst and the feedstock.

7. The system of any one of claims 1 to 6, wherein the model predictive control algorithm implemented by the advanced process controller comprises an optimizer module configured to control the one or more aspects of the biodiesel production system based on at least one of a flow rate, a cost, a price, or any combination thereof.

8. The system of claim 7, wherein the optimizer module is configured to control the one or more aspects of the biodiesel production system based on at least one of a feedstock flow rate, a methanol flow rate, a catalyst flow rate, a methanol cost, a feedstock cost, an energy cost, a biodiesel price, a glycerin price, or any combination thereof.

9. The system of claim 7 or 8, wherein the optimizer module is configured to maintain within a threshold at least one of a profit, a biodiesel quality, a glycerin quality, or any combination thereof.

10. The system of claim 2, wherein the biodiesel treatment system comprises a crude biodiesel tank configured to store the crude biodiesel and a biodiesel centrifuge configured to separate the crude biodiesel from the crude biodiesel tank into water and the biodiesel, and the advanced process controller comprises an advanced biodiesel flow controller, and
wherein the biodiesel flow controller is configured to maintain a flow rate of the crude biodiesel from the crude biodiesel tank based at least in part on a rate of change of a level of the crude biodiesel in the crude biodiesel tank.

11. A method, comprising:
operating a biodiesel production system (10) to produce the biodiesel;
implementing a model predictive control algorithm using an advanced process controller (60) to control one or more aspects of the biodiesel production system; and
**characterized by**
acting on a pressure-compensated temperature (308) of a glycerin dryer (226) configured to separate a neutralized glycerin into a crude methanol and glycerin via distillation using the model predictive control algorithm.

12. The method of claim 11, comprising providing an estimated value for a variable of the biodiesel production system using a virtual online analyzer of the model predictive control algorithm, wherein the virtual online analyzer is based on a mathematical model of the variable, or
comprising providing a desired feed flow rate of a raw material of the biodiesel production system based on a stoichiometric calculation using a stoichiometry module of the model predictive control algorithm, the raw material being methanol and the stoichiometric calculation being based on flow rates of a catalyst and a feedstock;
comprising providing an estimated value of a flow rate of the biodiesel production system based on a mass balance calculation using a mass balance module of the model predictive control algorithm, or
comprising controlling the one or more aspects of the biodiesel production system based on at least one of a flow rate, a cost, a price, or any combination thereof using an optimizer module of the model predictive control algorithm, or
comprising maintaining a flow rate of a crude biodiesel from a crude biodiesel tank based at least in part on a rate of change of a level of the crude biodiesel in the crude biodiesel tank using an advanced biodiesel flow controller of the advanced process controller.

## Patentansprüche

1. System, umfassend:
ein Biodieselproduktionssystem (10); und
eine erweiterte Prozesssteuerung (60), die dazu konfiguriert ist, einen modellgestützten prädiktiven Steueralgorithmus zu implementieren, um einen oder mehrere Aspekte des Biodieselproduktionssystems zu steuern,
**dadurch gekennzeichnet, dass**
das Biodieselproduktionssystem des Weiteren einen Glycerintrockner (226) umfasst, der dazu konfiguriert ist, ein neutralisiertes Glycerin (220) mittels Destillation in Rohmethanol und Glycerin aufzuspalten, und der modellgestützte prädiktive Steueralgorithmus, der von der erweiterten Prozesssteuerung durchgeführt wird, auf eine druckkompensierte Temperatur (308) des Glycerintrockners wirkt.

2. System nach Anspruch 1, wobei das Biodieselproduktionssystem umfasst:
ein Katalysatorvorbereitungssystem, das dazu konfiguriert ist, einen Katalysator vorzubereiten;
ein Einsatzstoffvorbereitungssystem, das dazu konfiguriert ist, einen Einsatzstoff vorzubereiten;
ein Umesterungsreaktionssystem, das dazu konfiguriert ist, den Katalysator, den Einsatzstoff und Methanol zu erhalten, um eine Rohmischung zu erzeugen;
ein Trennsystem, das dazu konfiguriert ist, die Rohmischung in einen Rohbiodiesel und ein Rohglycerin aufzuspalten;
ein Biodieselbehandlungssystem, das dazu konfiguriert ist, den Rohbiodiesel zu behandeln, um Biodiesel und das Rohmethanol zu erzeugen;
ein Glycerinbehandlungssystem, umfassend den Glycerintrockner, wobei das Glycerinbehandlungssystem dazu konfiguriert ist, das Rohglycerin zu behandeln, um das Glycerin und das Rohmethanol zu erzeugen; und
ein Methanolbehandlungssystem, das dazu konfiguriert ist, das Rohmethanol zu behandeln, um das Methanol zu erzeugen.

3. System nach Anspruch 1 oder 2, wobei der modellgestützte prädiktive Steueralgorithmus, der von der erweiterten Prozesssteuerung implementiert wird, eine virtuelle Online-Analysevorrichtung umfasst, die dazu konfiguriert ist, einen Schätzwert für eine Variable des Biodieselproduktionssystems bereitzustellen, wobei die virtuelle Online-Analysevorrichtung auf einem mathematischen Modell der Variablen basiert.

4. System nach einem der Ansprüche 1 bis 3, wobei die virtuelle Online-Analysevorrichtung dazu konfiguriert ist, den Schätzwert von mindestens einem aus einem Kopfdestillat-Gewichtsprozentwert, einer Methanolrektifizierer-Topzusammensetzung, einer Methanolrektifizierer-Bodenzusammensetzung, einer Biodieselproduktzusammensetzung, einer Biodieselwasserzusammensetzung, einer Methanol-in-Glycerin-Konzentration oder einer Kombination daraus bereitzustellen.

5. System nach einem der Ansprüche 1 bis 4, wobei der modellgestützte prädiktive Steueralgorithmus, der von der erweiterten Prozesssteuerung implementiert wird, ein Massenbilanzmodul umfasst, das dazu konfiguriert ist, eine geschätzte Zusammensetzung eines Durchflussstroms des Biodieselproduktionssystems basierend auf einer Massenbilanzberechnung bereitzustellen, und
wobei der Durchflussstrom des Biodieselproduktionssystems mindestens einer aus einem Katalysator, einem Einsatzstoff, eine Methanol, einem Biodiesel, einem Glycerin oder einer Kombination daraus ist.

6. System nach einem der Ansprüche 1 bis 5, wobei der modellgestützte prädiktive Steueralgorithmus, der von der erweiterten Prozesssteuerung implementiert wird, ein Stöchiometriemodul umfasst, das dazu konfiguriert ist, eine erwünschte Zufuhrdurchflussrate eines Rohstoffes des Biodieselproduktionssystems basierend auf einer stöchiometrischen Berechnung bereitzustellen, wobei das Rohmaterial mindestens eines aus Einsatzstoff, Methanol, Säure, Ätzmittel oder einer Kombination daraus umfasst, wobei die stöchiometrische Berechnung auf Durchflussraten des Katalysators und des Einsatzstoffes beruht.

7. System nach einem der Ansprüche 1 bis 6, wobei der modellgestützte prädiktive Steueralgorithmus, der von der erweiterten Prozesssteuerung implementiert wird, ein Optimiermodul umfasst, das dazu konfiguriert ist, den einen oder mehrere Aspekte des Biodieselproduktionssystems basierend auf mindestens einem aus einer Durchflussrate, Kosten, Preis oder einer Kombination daraus zu steuern.

8. System nach Anspruch 7, wobei das Optimiermodul dazu konfiguriert ist, den einen oder mehreren Aspekte des Biodieselproduktionssystems basierend auf mindestens einem aus einer Einsatzstoffdurchflussrate, einer Methanoldurchflussrate, einer Katalysatordurchflussrate, Methanolkosten, Einsatzstoffkosten, Energiekosten, Biodieselpreis, Glycerinpreis oder einer Kombination daraus zu steuern.

9. System nach Anspruch 7 oder 8, wobei das Optimiermodul dazu konfiguriert ist, mindestens eines aus einem Profit, einer Biodieselqualität, einer Glycerinqualität oder einer Kombination daraus innerhalb eines Schwellenwertes zu halten.

10. System nach Anspruch 2, wobei das Biodieselbehandlungssystem einen Rohbiodieseltank umfasst, der dazu konfiguriert ist, den Rohbiodiesel zu lagern, und eine Biodieselzentrifuge, die dazu konfiguriert ist, den Rohbiodiesel aus dem Rohbiodieseltank in Wasser und den Biodiesel aufzuspalten, und wobei die erweiterte Prozesssteuerung eine erweiterte Biodieseldurchflusssteuerung umfasst, und
wobei die Biodieseldurchflusssteuerung dazu konfiguriert ist, eine Durchflussrate des Rohbiodiesels aus dem Rohbiodieseltank basierend zumindest zum Teil auf einer Änderungsrate eines Pegels des Rohbiodiesels in dem Rohbiodieseltank aufrecht zu erhalten.

11. Verfahren, umfassend:
Betreiben eines Biodieselproduktionssystems (10) zum Erzeugen des Biodiesels;
Implementieren eines modellgestützten prädiktiven Steueralgorithmus unter Verwendung einer erweiterten Prozesssteuerung (60) zum Steuern von einem oder mehreren Aspekten des Biodieselproduktionssystems; und
**gekennzeichnet durch**
Einwirken auf eine druckkompensierte Temperatur (308) eines Glycerintrockners (226), der dazu konfiguriert ist, ein neutralisiertes Glycerin zu einem Rohmethanol und Glycerin mittels Destillation aufzuspalten, unter Verwendung des modellgestützten prädiktiven Steueralgorithmus.

12. Verfahren nach Anspruch 11, umfassend das Bereitstellen eines Schätzwerts für eine Variable des Biodieselproduktionssystems unter Verwendung einer virtuellen Online-Analysevorrichtung des modellgestützten prädiktiven Steueralgorithmus, wobei die virtuelle Online-Analysevorrichtung auf einem mathematischen Modell der Variablen beruht, oder
umfassend das Bereitstellen einer erwünschten Zufuhrdurchflussrate eines Rohmaterials des Biodieselproduktionssystems basierend auf einer stöchiometrischen Berechnung unter Verwendung eines Stöchiometriemoduls des modellgestützten prädiktiven Steueralgorithmus, wobei es sich bei dem Rohmaterial um Methanol handelt und wobei die stöchiometrischen Berechnung auf Durchflussraten eines Katalysators und eines Einsatzstoffes basiert;
umfassend das Bereitstellen eines Schätzwertes einer Durchflussrate des Biodieslproduktionssystems basierend auf einer Massenbilanzberechnung unter Verwendung eines Massenbilanzmoduls des modellgestützten prädiktiven Steueralgorithmus, oder
umfassend das Steuern der einen oder mehreren Aspekte des Biodieselproduktionssystems basierend auf mindestens einem aus einer Durchflussrate, Kosten, Preis oder einer Kombination daraus unter Verwendung eines Optimiermoduls des modellgestützten prädiktiven Steueralgorithmus, oder
umfassend das Aufrechterhalten einer Durchflussrate eines Rohbiodiesels aus einem Rohbiodieseltank basierend zumindest zum Teil auf einer Änderungsrate eines Pegels des Rohbiodiesels in dem Rohbiodieseltank unter Verwendung einer erweiterten Biodieseldurchflusssteuerung der erweiterten Prozesssteuerung.

## Revendications

1. Système, comprenant :
un système de production de biodiesel (10) ; et
un contrôleur de procédé avancé (60) configuré pour mettre en oeuvre un algorithme de contrôle prédictif à modèle pour contrôler un ou plusieurs aspects du système de production de biodiesel,
**caractérisé en ce que**
le système de production de biodiesel comprend en outre un séchoir de glycérine (226) configuré pour séparer une glycérine neutralisée (220) en du méthanol brut et de la glycérine par distillation, et l'algorithme de contrôle prédictif à modèle mis en oeuvre par le contrôleur de procédé avancé agit sur une température compensée de la pression (308) du séchoir de glycérine.

2. Système de la revendication 1, dans lequel le système de production de biodiesel comprend :
un système de préparation de catalyseur configuré pour préparer un catalyseur ;
un système de préparation de charge configuré pour préparer une charge ;
un système de réaction de transestérification configuré pour recevoir le catalyseur, la charge et du méthanol pour produire un mélange brut ;
un système de séparation configuré pour séparer le mélange brut en un biodiesel brut et une glycérine brute ;
un système de traitement de biodiesel configuré pour traiter le biodiesel brut pour produire du biodiesel et le méthanol brut ;
un système de traitement de glycérine comprenant le séchoir de glycérine, le système de traitement de glycérine étant configuré pour traiter la glycérine brute pour produire la glycérine et le méthanol brut ; et
un système de traitement de méthanol configuré pour traiter le méthanol brut pour produire le méthanol.

3. Système de la revendication 1 ou 2, dans lequel l'algorithme de contrôle prédictif à modèle mis en oeuvre par le contrôleur de procédé avancé comprend un analyseur en ligne virtuel configuré pour fournir une valeur estimée d'une variable du système de production de biodiesel, l'analyseur en ligne virtuel étant basé sur un modèle mathématique de la variable.

4. Système de l'une quelconque des revendications 1 à 3, dans lequel l'analyseur en ligne virtuel est configuré pour fournir la valeur estimée d'au moins une variable parmi un pourcentage pondéral de distillat de tête, une composition en haut de la tour de rectification de méthanol, une composition en bas de la tour de rectification de méthanol, une composition du produit biodiesel, une composition en eau du biodiesel, une concentration de méthanol dans la glycérine, ou toute combinaison de ceux-ci.

5. Système de l'une quelconque des revendications 1 à 4, dans lequel l'algorithme de contrôle prédictif à modèle mis en oeuvre par le contrôleur de procédé avancé comprend un module de bilan massique configuré pour fournir une composition estimée d'un courant du système de production de biodiesel basée sur un calcul de bilan massique, et
dans lequel le courant du système de production de biodiesel est au moins un courant parmi un catalyseur, une charge, un méthanol, un biodiesel, une glycérine, ou toute combinaison de ceux-ci.

6. Système de l'une quelconque des revendications 1 à 5, dans lequel l'algorithme de contrôle prédictif à modèle mis en oeuvre par le contrôleur de procédé avancé comprend un module de stoechiométrie configuré pour fournir un débit d'alimentation souhaité d'une matière première du système de production de biodiesel basé sur un calcul stoechiométrique, la matière première comprenant au moins un constituant parmi une charge, du méthanol, un acide, de la soude caustique, ou toute combinaison de ceux-ci, le calcul stoechiométrique étant basé sur des débits du catalyseur et de la charge.

7. Système de l'une quelconque des revendications 1 à 6, dans lequel l'algorithme de contrôle prédictif à modèle mis en oeuvre par le contrôleur de procédé avancé comprend un module d'optimisation configuré pour contrôler le ou les aspects du système de production de biodiesel sur la base d'au moins un paramètre parmi un débit, un coût, un prix, ou toute combinaison de ceux-ci.

8. Système de la revendication 7, dans lequel le module d'optimisation est configuré pour contrôler le ou les aspects du système de production de biodiesel sur la base d'au moins un paramètre parmi un débit de charge, un débit de méthanol, un débit de catalyseur, un coût de méthanol, un coût de charge, un coût énergétique, un prix de biodiesel, un prix de glycérine, ou toute combinaison de ceux-ci.

9. Système de la revendication 7 ou 8, dans lequel le module d'optimisation est configuré pour maintenir à l'intérieur d'un seuil au moins un paramètre parmi un profit, une qualité de biodiesel, une qualité de glycérine, ou toute combinaison de ceux-ci.

10. Système de la revendication 2, dans lequel le système de traitement de biodiesel comprend une cuve de biodiesel brut configurée pour stocker le biodiesel brut et une centrifugeuse à biodiesel configurée pour séparer le biodiesel brut provenant de la cuve de biodiesel brut en eau et biodiesel, et le contrôleur de procédé avancé comprend un régulateur de débit de biodiesel avancé, et
dans lequel le régulateur de débit de biodiesel est configuré pour maintenir un débit du biodiesel brut provenant de la cuve de biodiesel brut au moins en partie sur la base d'une vitesse de variation d'un niveau du biodiesel brut dans la cuve de biodiesel brut.

11. Procédé, comprenant les étapes suivantes :
faire fonctionner un système de production de biodiesel (10) pour produire le biodiesel ;
mettre en oeuvre un algorithme de contrôle prédictif à modèle en utilisant un contrôleur de procédé avancé (60) pour contrôler un ou plusieurs aspects du système de production de biodiesel ; et
**caractérisé par** l'étape suivante :
agir sur une température compensée de la pression (308) d'un séchoir de glycérine (226) configuré pour séparer une glycérine neutralisée en un méthanol brut et de la glycérine par distillation en utilisant l'algorithme de contrôle prédictif à modèle.

12. Procédé de la revendication 11, comprenant l'étape consistant à fournir une valeur estimée d'une variable du système de production de biodiesel en utilisant un analyseur en ligne virtuel de l'algorithme de contrôle prédictif à modèle, l'analyseur en ligne virtuel étant basé sur un modèle mathématique de la variable, ou
comprenant l'étape consistant à fournir un débit d'alimentation souhaité d'une matière première du système de production de biodiesel basé sur un calcul stoechiométrique en utilisant un module de stoechiométrie de l'algorithme de contrôle prédictif à modèle, la matière première étant du méthanol et le calcul stoechiométrique étant basé sur des débits d'un catalyseur et d'une charge ;
comprenant l'étape consistant à fournir une valeur estimée d'un débit du système de production de biodiesel basée sur un calcul de bilan massique en utilisant un module de bilan massique de l'algorithme de contrôle prédictif à modèle, ou
comprenant l'étape consistant à contrôler le ou les aspects du système de production de biodiesel sur la base d'au moins un paramètre parmi un débit, un coût, un prix, ou toute combinaison de ceux-ci en utilisant un module d'optimisation de l'algorithme de contrôle prédictif à modèle, ou
comprenant l'étape consistant à maintenir un débit d'un biodiesel brut provenant d'une cuve de biodiesel brut au moins en partie sur la base d'une vitesse de variation d'un niveau du biodiesel brut dans la cuve de biodiesel brut en utilisant un régulateur de débit de biodiesel avancé du contrôleur de procédé avancé.
